# EUROPÄISCHE PATENTSCHRIFT

(11) **EP 0 790 086 B1**
(45) Veröffentlichungstag und Bekanntmachung des Hinweises auf die Patenterteilung: **04.12.2002**
(21) Anmeldenummer: 97890023.1
(22) Anmeldetag: 11.02.1997
(51) Int. Cl.: B21D 43/00, B65G 47/14

(54) **Verfahren und Vorrichtung zur Vereinzelung und Weiterbearbeitung von Metallstäben**
Method and device for separating and further processing of metal bars
Méthode et dispositif pour la séparation et le traitement ultérieur des barres métalliques

(30) Priorität: 16.02.1996 AT 27896
(43) Veröffentlichungstag der Anmeldung: 20.08.1997
(73) Patentinhaber: BÖHLER Edelstahl GmbH, A-8605 Kapfenberg (AT)
(72) Erfinder: Barg, Herbert, 8605 Kapfenberg (AT); Fugger, Erwin, Mag. Ing., 2486 Pottendorf (AT); Bammer, Manfred, Dipl. Ing., 1220 Wien (AT)
(74) Vertreter: Wildhack, Helmut, Dipl.-Ing. Dr.

(56) Entgegenhaltungen:
- EP-A- 0 480 548
- DE-A- 2 417 851

## Beschreibung

Die Erfindung betrifft ein Verfahren zu einer Vereinzelung aus einem Bündel und einer Weiterbearbeitung, insbesondere einem Richten, von gekrümmten Metallstäben mit runder, polygonaler oder asymmetrisch profilierter Querschnittsform. Weiters umfaßt die Erfindung eine Vorrichtung zu einer Vereinzelung aus einem Bündel und einer Bereitstellung für eine Weiterverarbeitung, insbesondere einem Richten, von gekrümmten Metallstäben mit runder, polygonaler oder asymmetrisch profilierter Querschnittsform.

Die Erfindung betrifft auch ein Verfahren zur Verwendung von optoelektronischen Vermessungsgeräten in einer Vorrichtung zu einer Vereinzelung auf einem Bündel.

Gleichartige Metallstäbe mit einem Durchmesser oder einer Querschnittsabmessung von größer als 5,6 mm, insbesondere größer als 10,1 mm, werden nach der Erzeugung zu Losen meist in Bündeln zusammengefaßt und einer Weiterbearbeitung zugeführt. Derartige Stabbündel können auch, wenn erforderlich, vor einer weiteren, zum Beispiel formgebenden Bearbeitung, einer Wärmebehandlung unterworfen werden, um die Materialeigenschaften der Stäbe in gewünschter Form einzustellen.

Bündel mit einer Länge von meist größer als 2,1 m werden durch Zusammen- bzw. Umfassen der Stäbe in einem Behältnis oder durch ein Zusammenschnüren mit zum Beispiel Metalldraht gebildet, wobei herstellungsbedingt und/oder infolge einer Wärmebehandlung bzw. Glühung die Metallstäbe nicht gerade sondern vielfach krumm sind und oft miteinander bzw. ineinander, über deren Länge meist unterschiedlich, zum Beispiel fächerförmig, verstrickt vorliegen. Zur weiteren Bearbeitung ist es erforderlich, die Bündel auf einem Ablagetisch geöffnet aufzulegen und die einzelnen Metallstäbe in einer Folge einer dafür vorgesehenen Anlage bzw. Maschine zuzuführen.

Eine Vereinzelung mit einem Abziehen der jeweiligen Metallstäbe für einen weiteren Bearbeitungsschritt vom geöffneten Bündel am Ablagetisch bis zu einem Einführen in eine folgende Bearbeitungseinrichtung ist auf Grund ihrer krummen Form und Verstricktheit nicht einfach durchzuführen und mit großen Arbeitsaufwand sowie mit hohen Kosten verbunden, wobei auch eines erhöhten Zeitaufwandes wegen der Nutzungsgrad der folgenden Bearbeitungseinrichtungen verringert sein kann.

Bei den meisten Vereinzelungen mit einer Zuführung des Materials zu einer Folgeeinrichtung wird im wesentlichen derart vorgegangen, daß Personen bzw. dort beschäftigte Arbeiter einen besonders günstig gelegenen Stab aus dem geöffneten, am Ablagetisch aufgelegten Bündel auswählen, einen Greifer zum Ende des ausgewählten Stabes steuern, dieses Ende festklemmen, den Stab mittels des Greifers aus dem Bündel herausziehen und dessen Ende in den Einlauf einer Bearbeitungseinrichtung einbringen.

Derartige dem Stand der Technik entsprechende Arbeitsweisen haben wesentliche Nachteile wie: eine Auswahl der Stäbe erfolgt nicht automatisch sondern muß aufwendig, meist von an der Vorrichtung beschäftigten Personen durchgeführt werden, eine wirkungsvolle Lockerung der gegenseitigen Verstrickung der krummen Stäbe ist vielfach nicht vorgesehen, beim Abziehen einzelnder Stäbe aus dem Bündel wird gegebenenfalls zumindest ein weiterer Stab mitgefördert, der vor dem Einzugsbereich der Folgeeinrichtung gesondert abgelegt werden muß, eine Zuführung der Stäbe zu den Weiterbearbeitungseinrichtungen kann nicht in einer optimalen Taktfolge sichergestellt werden und dergleichen mehr. Bezüglich des Arbeitsäblaufes und dessen Wirtschaftlichkeit kann festgestellt werden, daß eine einzelne Bereitstellung und eine Weiterbearbeitung von krummen Stäben aus einem Bündel nicht mit einer gewünschten Effizienz und bei geringer Erzeugungssicherheit erfolgt.

Hier will die Erfindung Abhilfe schaffen und setzt sich zum Ziel, die Nachteile der bekannten Vereinzelungssysteme und Vereinzelungseinrichtungen für gekrümmte Metallstäbe mit nachfolgender Zuführung derselben zu einer Weiterbearbeitung zu beseitigen und ein neues wirtschaftliches Verfahren sowie eine verbesserte produktionssichere und mit hoher Taktfolge beaufschlagbare Vorrichtung zu erstellen.

Dieses Ziel wird bei einem Verfahren der eingangs genannten Art dadurch erreicht, daß ein ein- oder mehrmaliges Anheben und Absenken von zumindest Teilen des Bündels zumindest an einem Bündelende erfolgt und dabei zumindest zwei Metallstabenden auf erhöhtem Niveau gehalten werden, sodann eine Lageermittlung zumindest der Endenbereiche der auf erhöhtem Niveau gehaltenen Stäbe durchgeführt wird und auf Grund der Lageermittlung mindestens ein günstig gelegener Metallstab ausgewählt und jeweils eine Greifeinrichtung je Stab im Bereich des Stabendes positioniert wird, worauf eine Klemmung der Greifeinrichtung bzw. der Greifeinrichtungen am Stab sowie ein horizontales Abziehen des Metallstabes bzw. der Stäbe mit dieser bzw. diesen vom Bündel zur Vereinzelung und eine Auflage auf einem Auflagetisch und/oder eine Zu- bzw. Einführung desselben bzw. derselben zu einer bzw. in eine Anlage zur Weiterbearbeitung, zum Beispiel eine Richtanlage, erfolgen und an jedem Metallstab eine Bearbeitung, zum Beispiel eine Richtoperation, durchgeführt wird.

Die mit dem erfindungsgemäßen Verfahren erzielten Vorteile bestehen insbesondere darin, daß eine Vereinzelung von in einem Bündel aus Raum- und Transportgründen eng gepackten krummen Metallstäben automatisch sowie mit hoher Sicherheit und großer Wirtschaftlichkeit erfolgt. Dabei kann bei dichten Bündelpackungen ein mehrmaliges Anheben und Absenken der Stäbe zur gegenseitigen Lockerung derselben günstig sein, wonach das Halten einiger Stabenden auf erhöhtem Niveau eine besonders genaue und einfache Lage- und Positionsfeststellung fördert. Dies ermöglicht in vorteilhafter Weise sowohl eine rasche Auswahl des bestgelegenen Stabes als auch eine genaue Positionierung der Greifeinrichtung. Von besonderer Wichtigkeit ist dies bei einer Vereinzelung von kantigen, insbesondere unsymmetrische Querschnitte aufweisenden Stäben, welche mit einer bestimmten Querschnittsachslage, die durch Drehung der Greifeinrichtung erstellbar ist, der Weiterbearbeitungseinrichtung zugeführt werden müssen. Eine Lockerung der Stäbe im offenen Bündel am Ablagetisch und eine Auswahl eines günstig gelegenen Metallstabes sind auch deshalb von besonderem Vorteil, weil dadurch eine Klemmung der Greifeinrichtung mit geringer Krafteinwirkung ermöglicht wird, ohne die Sicherheit bei einem horizontalen Abziehen eines gekrümmten Stabes nachteilig zu beeinflussen. Weiters kann die Auflage des Stabes auf einen Auflagetisch und/oder eine Zu- bzw. Einführung desselben in eine Anlage zur Weiterbearbeitung in einfacher Weise störungsfrei erfolgen, weil der Rückhalt durch die Krümmungen der Stäbe weitgehend ausgeschaltet und eine günstige Auflagepositionieurng ermöglicht sind.

Von besonderem Vorteil ist, wenn das Metallstabbündel in, im wesentlichen horizontaler Lage, vorzugsweise mittels des Ablagetisches, auf ein erhöhtes Niveau in den Wirkungsbereich eines Haltemittels, insbesondere eines Elektromagneten, gehoben wird, und eine Aktivierung des Haltemittels erfolgt, worauf mindestens zwei Metallstabenden auf dem erhöhten Niveau gehalten und der Rest des Bündels abgesenkt werden. Dadurch wird nicht nur eine Vereinzelung der Stäbe besonders effizient und leicht durchführbar, sondern es kann auch durch eine Einstellung der Kraft des Haltemittels, insbesondere der Höhe der Feldstärke der Magnete, eine Berücksichtigung der Form und Eigenschaften der Metallstäbe erfolgen.

Vorteilhaft dabei ist, wenn das Metallstabbündel nach dem Ablegen mit dessen einem Ende in den Wirkungsbereich eines Haltemittels eingebracht und zumindest ein Teil des Bündels endenseitig mit einer Hubeinrichtung angehoben wird.

Für herstellungsbedingt vorgesehene oder für gegebenenfalls aus Schutzgasgründen notwendige erforderliche dichtgepackte Bündel mit hohem Krümmungsgrad der Stäbe kann es. günstig sein, wenn das Metallstabbündel beim Heben und/oder Absenken von zumindest einem Ende desselben einer Rüttelbewegung unterworfen wird.

Wenn bei der Lageermittlung des Metallstabes jeweils eine Lageermittlung des Querschnittprofiles erfolgt und auf Grund der ermittelten Querschnittslage des profilierten Stabes eine entsprechend geformte Greifeinrichtung eines Roboters eingerichtet, am Stabende positioniert und dieses geklemmt wird, wonach der Stab abgezogen, bei der Vereinzelung in eine vorgesehene Querschnittslage gedreht, auf eine Auflage und/oder in die Anlage zur Weiterbearbeitung, insbesondere in eine Richtanlage verbracht wird, kann einerseits eine besonders sichere, für komplizierte Stangenprofile oft aufwendige Verfrachtung des Metallstabes leicht durchgeführt, andererseits eine hohe Bearbeitungstaktfrequenz erreicht werden.

Die Erzeugungssicherheit wird weiters erhöht, wenn die Metallstäbe bei der Vereinzelung auf einem Auflagetisch aufgelegt und quer zur Tischlängsachse, vorzugsweise mittels Transportketten oder dergleichen, in eine Zuführungsrinne zur Richtanlage verbracht werden oder ein Endenteil eines profilierten Metallstabes ergriffen, bei der Vereinzelung in eine gewünschte Querschnittslage gedreht und in die Richtanlage eingeführt wird.

Wenn weiters die Lageermittlung der Stabenden durch eine optoelektronische Sensorik, insbesondere durch ein Lichtschnittverfahren, erfolgt und die Regelung der Stabvereinzelungs- und Zuführungseinrichtung zu einer Richtanlage durch eine zugehörige Auswerte- und Steuereinrichtung durchgeführt wird, kann nicht nur ein zielsicheres Greifen bzw. Klemmen der Metallstäbe erfolgen, sondern es ist auch eine laufende Kontrolle hinsichtlich gegebenenfalls verschleppter Stäbe möglich, wobei entsprechende Korrektur- und/oder Ausscheidmaßnahmen einleitbar sind.

Eine Vorrichtung der eingangs genannten Art, insbesondere zur Durchführung oben dargelegten Verfahrens, entsprechend der Erfindung ist zielgemäß dadurch gekennzeichnet, daß die Vorrichtung vor einem, in achsialer Abzugsrichtung der Metallstäbe gesehen, anschließenden Greifbereich mindestens ein Hebe-und ein Haltemittel für Stabenden vorgesehen ist und optoelektronische Vermessungsgeräte derart angeordnet sind, daß im Greifbereich mit diesen die Lage der angehobenen Metallstabenden ermittelbar ist und in diesem Greifbereich von einer Greifeinrichtung eines in einer Portalführung horizontal, im wesentlichen in Achsrichtung der Metallstäbe bewegbar gelagerten Roboters zumindest eines dieser Stabenden festhaltbar ist und in Längsrichtung der Portalführung im Aktionsbereich des in dieser verfahrbaren Roboters bzw. im Bereich der Greifeinrichtung ein Auflegetisch für die einzelnen Metallstäbe sowie in diesen Auflegetisch integriert oder mittels eines Quertransportes beschickbar eine Zuführungsrinne zur Einbringung des gekrümmten Metallstabes in eine an sich bekannte Anlage zur Weiterbearbeitung , zum Beispiel in eine Richtanlage, angeordnet sind. Die Vorteile der so erstellten und gebildeten Einrichtung sind im wesentlichen darin zu sehen, daß eine Vereinzelung von Metallstäben und ein Materialfluß mit hoher Effizienz und hoher Wirtschaftlichkeit erreicht werden können. Eine Anordnung eines verfahrbaren Roboters bzw. einer bewegbaren Greifeinrichtung zwischen Ablagetisch für-das Bündel und Auflegetisch für die einzelnen Stäbe in Flußrichtung des Stabmaterials, wobei optoelektronische Geräte im Bereich zwischen den Tischen im Verbund mit einer Steuereinrichtung auf Grund einer Lageermittlung der Stabenden den Materialfluß mit kurzer Taktfolge steuern, sind anlagentechnisch, aber auch verfahrensablaufbezogen von besonderem Vorteil.

Es ist dabei günstig, wenn der Ablagetisch mindestens drei antreibbare Transportrollen besitzt und vertikal in den Bereich eines auf erhöhtem Niveau befindlichen Haltemittels, welches vorzugsweise als Elektromagnet ausgebildet ist, anhebbar ist, weil damit eine besonders gute Lockerung der Stäbe in einem geöffneten Bündel bewerkstelligt werden kann.

Wenn das Hebemittel als vorzugsweise hydraulisch anhebbarer Abstütztel für die Metallstabenden ausgebildet ist, kann auf einfache Weise eine Darbietung günstig gelegener Stabenden erfolgen.

Ein besonders präzises und wirkungsvolles Verbringen des jeweils ausgewählten Metallstabes wird erreicht, wenn der Roboter mit Greifeinrichtung, Schwenk- bzw. Verfahr- und Hubmechanik sowie Greifarm einen regelbaren Antrieb besitzt und in der Portalführung horizontal verschiebbar ist, wobei ein weiterer Vorteil hinsichtlich einer raschen Bearbeitungsfolge erreicht werden kann, wenn der Auflagetisch ein Quertransportmittel, vorzugsweise Transportketten, aufweist und die Zuführungsrinne antreibbare Transportrollen besitzt.

Bevorzugt ist das optoelektronische Vermessungsgerät als an sich bekannte Lichtschnitt-Vermessungseinrichtung ausgebildet und mit einer Auswertungs-und Steuereinrichtung verbunden, wobei die Bewegungen der abtreibbaren Vorrichtungsteile durch eine Steuereinrichtung gesteuert sind.

Für eine Durchführung des erfindungsgemäßen Verfahrens in einer eben solchen Vorrichtung haben sich, wie gefunden wurde, eine Verwendung von optoelektronischen Vermessungsgeräten, insbesondere von solchen für eine Anwendung des Lichtschnittverfahrens und eine zugeordnete Auswerte- und Regeleinrichtung zur Steuerung der Vereinzelung als besonders vorteilhaft erwiesen.

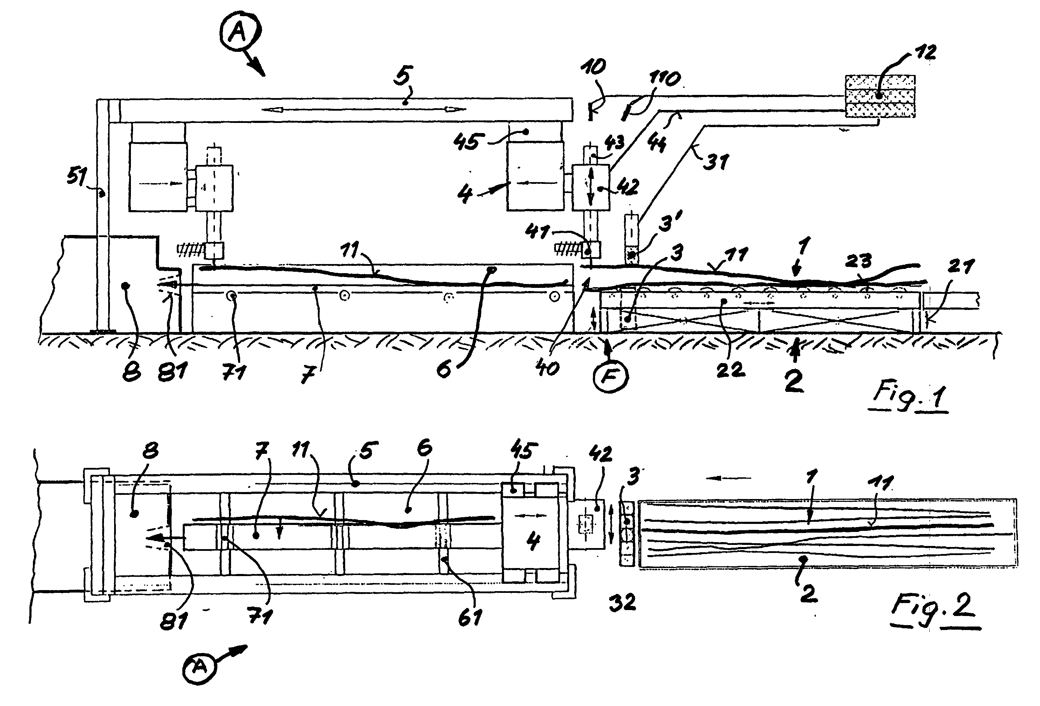

Im folgenden wird die Erfindung anhand von lediglich einen Ausführungsweg darstellenden Zeichnungen näher erläutert. Es zeigt
Fig. 1 eine Seitenansicht einer Vereinzelungsvorrichtung und
Fig. 2 einen entsprechenden Grundriß
Im Fig. 1 ist eine erfindungsgemäße Vorrichtung A zur Vereinzelung von krummem Stabmaterial schematisch im Aufriß und in Fig. 2 eine Vorrichtung im Grundriß dargestellt, wobei ein Metallstabbündel 1 auf einen Ablagetisch 2 von einem Hebezeug abgelegt wird. Durch Transportrollen 23, welche in Seitenteilen 22 des Tisches 2 abgestützt sind, kann das Bündel 1 in einen gegebenenfalls mit einem Anschlag versehenen Stabenden-Vorordnungsbereich F verbracht werden. Mittels eines Hebemittels 3 werden an einer Seite des Bündels 1 die Enden von Stäben 11 in einen Wirkungsbereich einen Haltemittels 3', welches mit einer Steuerung 12 über ein Leitungsmittel 31 verbunden ist, gebracht, wobei einige Stäbe auf erhöhter Position gehalten werden können. Optoelektronische Vermessungsgeräte 10, 110 ermitteln eine räumliche Position von gehaltenen Enden von Stäben 11 und übermitteln diesbezügliche Ergebnisse einer Steuereinrichtung 12, welche eine Lagefeststellung von im Greifbereich 40 eines Roboters 4 gelegenen Stäben durchführt. Bei ungünstiger Lage kann ein gegebenenfalls wiederholbares Abfallenlassen der gehaltenen Stäbe und ein neuerliches Anheben derselben erfolgen. Wird nun ein Stab 11 bzw. Stabende als günstig liegend ermittelt, so steuert über eine Verbindung 44 eine Steuereinrichtung 12 einen Roboter 4, welcher zum Beispiel in einer Portalführung 5, welche von Vertikalpfeilern 51 gehalten wird, horizontal verfahrbar ist, derart, daß dessen Greifeinrichtung 41 ein Stabende zu klemmen vermag. Nach einer Klemmung bzw. nach einem Greifen eines Stabes 11 wird dieser zum Beispiel mittels der Greifeinrichtung 41 eines Roboterarmes 43 und eines Antriebes 42 sowie eines Horizontalfördermittels 45 horizontal verbracht und auf einen Auflegetisch 6 abgeworfen. Vom Auflegetisch 6 kann ein Stab 11 gegebenenfalls durch Querfördereinrichtungen 61 in eine Zuführungsrinne 7 eingebracht und von-dieser mittels Transportrollen 71 in eine Anlage zur Weiterbearbeitung, zum Beispiel in eine Richtanlage 8 durch deren Zuführungsmittel 81, zum Beispiel Schutzrohr, eingebracht werden.

## Patentansprüche

1. Verfahren zu einer Vereinzelung aus einem Bündel (1) und einer Bereitstellung für eine Weiterbearbeitung, insbesondere einem Richten, von gekrümmten Metallstäben (11) mit runder, polygonaler oder asymmetrisch profilierter Querschnittsform, wobei das Metallstabbündel (1) auf einem Ablagetisch (2) abgelegt und gegebenenfalls eine dieses formende Umfassung entfernt wird, **dadurch gekennzeichnet, daß** danach ein ein- oder mehrmaliges Anheben und Absenken von zumindest Teilen des Bündels (1) zumindest an einem Bündelende erfolgt und dabei zumindest zwei Metallstabenden auf erhöhtem Niveau gehalten werden, sodann eine Lageermittlung zumindest der Endenbereiche der auf erhöhtem Niveau gehaltenen Stäbe durchgeführt wird und auf Grund der Lageermittlung mindestens ein günstig gelegener Metallstab ausgewählt und jeweils eine Greifeinrichtung (41) je Stab im Bereich des Stabendes positioniert wird, worauf eine Klemmung der Greifeinrichtung bzw. der Greifeinrichtungen am Stab sowie ein horizontales Abziehen des Metallstabes bzw. der Stäbe mit dieser bzw. diesen vom Bündel zur Vereinzelung und eine Auflage auf einem Auflagetisch (6) und/oder eine Zu- bzw. Einführung (7) desselben bzw. derselben zu einer bzw. in eine Anlage zur Weiterbearbeitung, zum Beispiel in eine Richtanlage (8), erfolgen und an jedem Metallstab eine Bearbeitung, zum Beispiel eine Richtoperation, durchgeführt wird.

2. Verfahren nach Anspruch 1, **dadurch gekennzeichnet, daß** das Metallstabbündel (1) in, im wesentlichen horizontaler Lage, vorzugsweise mittels des Ablagetisches (2), auf ein erhöhtes Niveau in den Wirkungsbereich eines Haltemittels (3), insbesondere eines Elektromagneten, gehoben wird und eine Aktivierung des Haltemittels erfolgt, worauf mindestens zwei Metallstabenden auf dem erhöhten Niveau gehalten werden und der Rest des Bündels abgesenkt wird.

3. Verfahren nach Anspruch 1, **dadurch gekennzeichnet, daß** das Metallstabbündel (1) nach dem Ablegen mit dessen einem Ende in den Wirkungsbereich eines Haltemittels (3') eingebracht und zumindest ein Teil des Bündels endenseitig mit einer Hubeinrichtung (3) angehoben wird.

4. Verfahren nach einem der Ansprüche 1 bis 3, **dadurch gekennzeichnet, daß** das Metallstabbündel beim Heben und/oder beim Absenken von zumindest einem Ende desselben einer Rüttelbewegung unterworfen wird.

5. Verfahren nach einem der Ansprüche 1 bis 4, **dadurch gekennzeichnet, daß** bei der Lageermittlung des Metallstabes jeweils eine Lageermittlung des Querschnittsfprofiles erfolgt und auf Grund der ermittelten Querschnittslage des profilierten Stabes eine entsprechend geformte Greifeinrichtung (41) eines Roboters (4) eingerichtet, am Stabende positioniert und dieses geklemmt wird, wonach der Stab abgezogen, bei der Vereinzelung in eine vorgesehene Querschnittslage gedreht, auf eine Auflage und/oder in die Anlage zur Weiterbearbeitung, insbesondere in eine Richtanlage (8), verbracht wird.

6. Verfahren nach einem der Ansprüche 1 bis 5, **dadurch gekennzeichnet, daß** die Metallstäbe bei der Vereinzelung auf einem Auflagetisch (6) aufgelegt und quer zur Tischlängsachse, vorzugsweise mittels Transportketten, in eine Zuführungsrinne (7) zur Richtanlage verbracht werden.

7. Verfahren nach einem der Ansprüche 1 bis 6, **dadurch gekennzeichnet, daß** ein Endenteil eines profilierten Metallstabes ergriffen, bei der Vereinzelung in eine gewünschte Querschnittslage gedreht und in die Richtanlage (8) eingeführt wird.

8. Verfahren nach den Ansprüchen 1 bis 7, **dadurch gekennzeichnet daß** die Lageermittlung der Stabenden durch eine optoelektronische Sensorik (10; 110), insbesondere durch ein Lichtschnittverfahren, erfolgt und die Regelung der Stabvereinzelungsund Zuführungseinrichtung zu einer Richtanlage durch eine zugehörige Auswerteund Steuereinrichtung durchgeführt wird.

9. Vorrichtung zu einer Vereinzelung aus einem Bündel und einer Bereitstellung für eine Weiterbearbeitung, insbesondere einem Richten, von gekrümmten Metallstäben mit runder, polygonaler oder asymmetrisch profilierter Querschnittsform, insbesondere zur Durchführung des Verfahrens gemäß den vorgeordneten Ansprüchen, wobei die Vorrichtung (A) zumindest einen Ablagetisch (2) für zumindest ein Metallstabbündel (1) besitzt, **dadurch gekennzeichnet, daß** vor einem, in achsialer Abzugsrichtung der Metallstäbe (11) gesehen, anschließenden Greifbereich (40) mindestens ein Hebe- (3) und ein Haltemittel (3') für Stabenden vorgesehen ist und optoelektronische Vermessungsgeräte (10,110) derart angeordnet sind, daß im Greifbereich (40) mit diesen die Lage der angehobenen Metallstabenden ermittelbar ist und in diesem Greifbereich (40) von einer Greifeinrichtung (41) eines in einer Portalführung (5) horizontal, im wesentlichen in Achsrichtung der Metallstäbe (11) bewegbar gelagerten Roboters (4) zumindest eines dieser Stabenden festhaltbar ist und in Längsrichtung der Portalführung (5) im Aktionsbereich des in dieser verfahrbaren Roboters (4) bzw. im Bereich der Greifeinrichtung (41) ein Auflegetisch (6)'für die einzelnen Metallstäbe (11) sowie in diesen Auflegetisch (6) integriert oder mittels eines Quertransportes beschickbar eine Zuführungsrinne (7) zur Einbringung des gekrümmten Metallstabes (11) in eine an sich bekannte Anlage zur Weiterbearbeitung, zum Beispiel in eine Richtanlage (8), angeordnet sind.

10. Vorrichtung nach Anspruch 9, **dadurch gekennzeichnet, daß** der Ablagetisch (2) mindestens drei antreibbare Transportrollen (23) besitzt und vertikal (21) in den Bereich eines auf erhöhtem Niveau befindlichen Haltemittels (3), welches vorzugsweise als Elektromagnet (3') ausgebildet ist, anhebbar ist.

11. Vorrichtung nach Anspruch 9, **dadurch gekennzeichnet, daß** das Hebemittel (3) als vorzugsweise hydraulisch anhebbarer Abstützteil für die Metallstabenden (11') ausgebildet ist.

12. Vorrichtung nach einem der Ansprüche 9 bis 11, **dadurch gekennzeichnet, daß** der Roboter (4) mit Greifeinrichtung (41), Schwenk- bzw. Verfahr- und Hubmechanik (42) und Greifarm (43) einen regelbaren Antrieb (44) besitzt und in der Portalführung (5) horizontal verschiebbar ist.

13. Vorrichtung nach einem der Ansprüche 9 bis 12, **dadurch gekennzeichnet, daß** der Auflagetisch (7) ein Quertransportmittel (61), vorzugsweise Transportketten, aufweist und die Zuführungsrinne (7) antreibbare Transportrollen besitzt.

14. Vorrichtung nach einem der Ansprüche 9 bis 13,**dadurch gekennzeichnet, daß** das optoelektronische Vermessungsgerät (10,110) als an sich bekannte Lichtschnitt-Vermessungseinrichtung ausgebildet und mit einer Auswertungs- und Steuereinrichtung verbunden ist.

15. Vorrichtung nach einem der Ansprüche 9 bis 14, **dadurch gekennzeichnet, daß** die Bewegungen der antreibbaren Vorrichtungsteile durch eine Steuereinrichtung (12), welche mit der optoelektronischen Vermessungseinrichtung (10, 110) verbunden ist, gesteuert sind.

16. Verwendung von optoelektronischen Vermessungsgeräten (10,110), vorzugsweise des an sich bekannten Lichtschnittverfahrens, und einer zugeordneten Auswerte- und Steuerungseinrichtung in einer Vorrichtung (A) zu einer Vereinzelung aus einem Bündel und einer Bereitstellung für eine Weiterbearbeitung, insbesondere einem Richten, von gekrümmten Metallstäben (1) mit runder, polygonaler oder asymmetrisch profilierter Querschnittsform zur Feststellung der Lage der Metallstabendenbereiche sowie gegebenenfalls deren Querschnittsachslage in einem Verordnungsbereich (F) oder Greifbereich (40) und Heranführung, Einrichtung sowie Klemmung einer Greifeinrichtung (41) eines in einer Portalführung (5) horizontal verfahrbaren Roboters (4).

## Claims

1. A method of separating curved metal bars (11) of round, polygonal or asymmetrically profiled cross-sectional shape from a bundle (1) and preparing them for further processing, in particular straightening, wherein the bundle (1) of metal bars is deposited on a deposition table (2) and where necessary an enclosure shaping the said bundle (1) is removed, **characterized in that** after that at least parts of the bundle (1) are lifted and lowered one or more times at least at one end of the bundle and at least two metal-bar ends are held at an elevated level, then the position of at least the end areas of the bars held at the elevated level is determined and at least one advantageously positioned metal bar is selected on the basis of the determination of the position and one respective gripping device (41) is positioned *per* bar in the region of the bar end, after which the . gripping device or the gripping devices is or are clamped on the bar and the metal bar or the bars is or are withdrawn horizontally by the said gripping device or devices from the bundle for separation and it or they are placed on a support table (6) and/or it or they are supplied or inserted (7) to or into a unit for further processing, for example into a straightening unit (8), and processing, for example a straightening operation, is carried out on each metal bar.

2. A method according to Claim 1, **characterized in that** the bundle (1) of metal bars is lifted, in a substantially horizontal position, preferably by means of the deposition table (2) at an elevated level into the operative region of a holding means (3'), in particular an electromagnet, and the holding means is activated, after which at least two metal-bar ends are held at the elevated level and the remainder of the bundle is lowered.

3. A method according to Claim 1, **characterized in that** the bundle (1) of metal bars is inserted after the deposition with one end thereof into the operative region of a holding means (3'), and at least part of the bundle is lifted at the end by a lifting device (3).

4. A method according to one of Claims 1 to 3, **characterized in that** the bundle (1) of metal bars is subjected to a shaking movement during the lifting and/or during the lowering of at least one end thereof.

5. A method according to one of Claims 1 to 4, **characterized in that** during the determination of the position of the metal bar one respective determination of the position of the cross-sectional profile takes place in each case, and on the basis of the determined cross-sectional position of the profiled bar a suitably shaped gripping device (41) of a robot (4) is set up and is positioned at the end of the bar and the latter is clamped, after which the bar is withdrawn, is rotated during the separation into a cross-sectional position provided and is moved onto a support and/or into the unit for further processing, in particular into a straightening unit (8).

6. A method according to one of Claims 1 to 5, **characterized in that** during the separation the metal bars are placed on a support table (6) and are moved transversely to the longitudinal axis of the table, preferably by means of conveyor chains, into a supply channel (7) to the straightening unit.

7. A method according to one of Claims 1 to 6, **characterized in that** an end part of a profiled metal bar is gripped, is rotated during the separation into a desired cross-sectional position and is inserted into the straightening unit (8).

8. A method according to one of Claims 1 to 7, **characterized in that** the position of the bar ends is determined by an optoelectronic sensor means (10, 110), in particular by a light-section process, and the bar-separation device and the supply device to a straightening unit are regulated by an associated evaluation and control device.

9. A device for separating curved metal bars of round, polygonal or asymmetrically profiled cross-sectional shape from a bundle and preparing them for further processing, in particular straightening, in particular in order to perform the method according to the preceding Claims, wherein the device (A) comprises at least one deposition table (2) for at least one bundle (I) of metal bars, **characterized in that** at least one lifting means (3) and one holding means (3') for bar ends is provided in front of an adjoining gripping region (40), as viewed in the axial withdrawal direction of the metal bars (11), and optoelectronic measurement appliances (10, 110) are arranged in such a way that in the gripping region (40) the position of the raised metal-bar ends can be determined by the said measurement appliances (10, 110), and in the said gripping region (40) at least one of the said bar ends can be held fixed by a gripping device (41) of a robot (4) mounted horizontally in an overhead guide (5) and so as to be movable substantially in the axial direction of the metal bars (11), and a support table (6) for the individual metal bars (11) and a supply channel (7) - incorporated in the said support table (6) or chargeable by means of a transverse conveyor - for inserting the curved metal bar (11) into a unit known *per se* for further processing, for example into a straightening unit (8), are arranged in the longitudinal direction of the overhead guide (5) in the operational region of the robot (4) movable therein and in the region of the gripping device (41).

10. A device according to Claim 9, **characterized in that** the deposition table (2) comprises at least three drivable conveyor rollers (23) and it can be lifted vertically (21) into the region of a holding means (3) which is situated at an elevated level and which is preferably constructed in the form of an electromagnet (3').

11. A device according to Claim 9, **characterized in that** the lifting means (3) is constructed in the form of a support part - which can preferably be raised hydraulically - for the metal-bar ends (11').

12. A device according to one of Claims 9 to 11, **characterized in that** the robot (4) together with the gripping device (41), a lifting or moving and lifting mechanism (42) and a gripping arm (43) has a drive (44) capable of being regulated and is displaceable horizontally in the overhead guide (5).

13. A device according to one of Claims 9 to 12, **characterized in that** the support table (7) [*sic*] has a transverse conveying means (61), preferably conveyor chains, and the supply channel (7) has drivable conveyor rollers.

14. A device according to one of Claims 9 to 13, **characterized in that** the optoelectronic measurement appliance (10, 110) is constructed in the form of a light-section measurement device known *per se* and is connected to an evaluation and control device.

15. A device according to one of Claims 9 to 14, **characterized in that** the movements of the drivable parts of the device are controlled by a control device (12) which is connected to the optoelectronic measurement appliance (10, 110).

16. Use of optoelectronic measurement appliances (10, 110), preferably of the light-section device known *per se*, and an associated evaluation and control device, in a device (A) for separating curved metal bars (1) of round, polygonal or asymmetrically profiled cross-sectional shape from a bundle and preparing them for further processing, in particular straightening, in order to determine the position of the end areas of the metal bars and, where necessary, their cross-sectional axial position in an ordering region (F) or gripping region (40) and bringing up, setting up and clamping a gripping device (41) of a robot (4) which can be moved horizontally in an overhead guide (5).

## Revendications

1. Méthode de séparation à partir d'un faisceau (1) et de préparation en vue d'un traitement ultérieur, en particulier un dressage, de barres métalliques (11) déformées de section transversale ronde, polygonale ou à profil asymétrique, le faisceau de barres métalliques (1) étant déposé sur une table de réception (2) et l'éventuelle enveloppe maintenant en forme ledit faisceau étant ôtée, **caractérisée en ce qu'**ensuite au moins des parties du faisceau (1) sont relevées et abaissées à une ou plusieurs reprises au niveau d'au moins une extrémité du faisceau, au moins deux extrémités de barre métallique étant alors maintenues à un niveau surélevé, **en ce que** la position d'au moins les zones terminales des barres maintenues à un niveau surélevé est déterminée, **en ce que** sur la base de cette détermination de position au moins une barre métallique positionnée de manière favorable est choisie et un dispositif de préhension (41) par barre est positionné au niveau de l'extrémité de la barre, à la suite de quoi le ou les dispositifs de préhension sont resserrés sur la barre et la ou les barres métalliques sont extraites horizontalement du faisceau au moyen dudit ou desdits dispositifs de préhension en vue de leur séparation et **en ce que** la ou les barres sont déposées sur une table de réception (6) et/ou alimentées ou introduites (7) dans une installation de traitement ultérieur, par exemple une installation de dressage (8), et **en ce que** chaque barre métallique est soumise à un traitement, par exemple une opération de dressage.

2. Méthode selon la revendication 1,
**caractérisée en ce que** le faisceau de barres métalliques (1) est relevé dans une position sensiblement horizontale, de préférence au moyen de la table de réception (2), à un niveau surélevé situé dans la zone d'action d'un dispositif de maintien (3'), en particulier un électroaimant, et **en ce que** le dispositif de maintien est activé, à la suite de quoi au moins deux extrémités de barre métallique sont maintenues au niveau surélevé tandis que le reste du faisceau est abaissé.

3. Méthode selon la revendication 1, **caractérisée en ce qu'**une fois le faisceau de barres métalliques (1) déposé sur la table de réception, l'une de ses extrémités est portée dans la zone d'action d'un dispositif de maintien (3') et **en ce qu'**au moins une partie du faisceau est soulevée à une de ses extrémités au moyen d'un dispositif de levage (3).

4. Méthode selon l'une des revendications 1 à 3, **caractérisée en ce que** lorsque le faisceau de barres métalliques est soulevé et/ou abaissé par au moins une de ses extrémités, il est soumis à des secousses.

5. Méthode selon l'une des revendications 1 à 4, **caractérisée en ce que** chaque opération de détermination de la position de la barre métallique inclut une détermination de la position du profil de la section transversale et **en ce qu'**en fonction de la position déterminée de la section transversale de la barre profilée, un dispositif de préhension (41) de forme correspondante d'un robot (4) est mis en oeuvre et positionné à l'extrémité de la barre puis l'enserre, à la suite de quoi la barre est retirée, pivotée pendant sa séparation dans une position de section transversale prévue et transférée sur un support et/ou dans l'installation de traitement ultérieur, en particulier une installation de dressage (8).

6. Méthode selon l'une des revendications 1 à 5, **caractérisée en ce que**, pendant leur séparation, les barres métalliques sont déposées sur une table de réception (6) et transférées, de préférence au moyen de convoyeurs à chaîne, transversalement à l'axe longitudinal de la table, vers une goulotte d'alimentation (7) d'une installation de dressage.

7. Méthode selon l'une des revendications 1 à 6, **caractérisée en ce qu'**une partie terminale d'une barre métallique profilée est saisie, pivotée lors de la séparation dans une position de section transversale souhaitée puis introduite dans l'installation de dressage (8).

8. Méthode selon les revendications 1 à 7, **caractérisée en ce que** la position des extrémités de barre est déterminée au moyen de capteurs optoélectroniques (10 ; 110), en particulier selon une méthode de coupe optique, et **en ce que** le réglage de l'installation de séparation et d'alimentation de barres vers une installation de dressage est assuré par une unité d'analyse et de commande intégrée.

9. Dispositif de séparation à partir d'un faisceau et de préparation en vue d'un traitement ultérieur, en particulier un dressage, de barres métalliques déformées de section transversale ronde, polygonale ou à profil asymétrique, en particulier en mettant en oeuvre la méthode selon les revendications précédentes, le dispositif (A) comportant au moins une table de réception (2) d'au moins un faisceau de barres métalliques (1), **caractérisé en ce qu'**au moins un dispositif de levage (3) et un dispositif de maintien (3') des extrémités de barre sont prévus en amont d'une zone de préhension (40) adjacente, vu dans le sens d'extraction axial des barres métalliques (11), **en ce que** des appareils de mesurage optoélectroniques (10 ; 110) sont agencés de façon à permettre de déterminer la position des extrémités relevées des barres métalliques dans la zone de préhension (40), **en ce qu'**au moins une de ces extrémités de barre peut être fermement maintenue dans ladite zone de préhension (40) par un dispositif de préhension (41) d'un robot (4) monté mobile horizontalement, sensiblement dans la direction axiale des barres métalliques (11), dans un portique de guidage (5) et **en ce qu'**il est prévu, dans la direction longitudinale du portique de guidage (5) et dans la zone d'action du robot (4) déplaçable dans ce dernier ou dans la zone d'action du dispositif de préhension (41), une table de réception (6) des barres métalliques (11) séparées, ainsi qu'une rigole d'alimentation (7) intégrée à ladite table de réception (6) ou apte à être alimentée au moyen d'un transporteur transversal et destinée à acheminer la barre métallique déformée (11) vers une installation de traitement ultérieur connue en soi, par exemple une installation de dressage (8).

10. Dispositif selon la revendication 9, **caractérisé en ce que** la table de réception (2) comporte au moins trois galets transporteurs (23) pouvant être entraînés et peut être soulevée verticalement (21) au niveau d'un dispositif de maintien (3) situé à un niveau surélevé et constitué de préférence par un électroaimant (3').

11. Dispositif selon la revendication 9, **caractérisé en ce que** le dispositif de levage (3) consiste en une pièce d'appui des extrémités de barre métallique (11'), apte à être soulevée de préférence par voie hydraulique.

12. Dispositif selon l'une des revendications 9 à 11, **caractérisé en ce que** le robot (4) avec son dispositif de préhension (41), son mécanisme de pivotement/déplacement et de levage (42) et son bras préhenseur (43) a un entraînement réglable (44) et est mobile en translation horizontale dans le portique de guidage (5).

13. Dispositif selon l'une des revendications 9 à 12, **caractérisé en ce que** la table de réception (7) comporte un moyen de transport transversal (61), de préférence des convoyeurs à chaîne, et **en ce que** la goulotte d'alimentation (7) comporte des galets de transport aptes à être entraînés.

14. Dispositif selon l'une des revendications 9 à 13, **caractérisé en ce que** l'appareil de mesurage optoélectronique (10, 110) consiste en un dispositif de mesurage à coupe optique connu en soi et est relié à une unité d'analyse et de commande.

15. Dispositif selon l'une des revendications 9 à 14, **caractérisé en ce que** les mouvements des parties du dispositif aptes à être entraînées sont commandées par un dispositif de commande (12), qui est relié au dispositif de mesurage optoélectronique (10, 110).

16. Utilisation d'appareils de mesurage optoélectroniques (10, 110), de préférence selon la méthode de coupe optique connue en soi, et d'une unité intégrée d'analyse et de commande dans un dispositif (A) de séparation à partir d'un faisceau et de préparation en vue d'un traitement ultérieur, en particulier un dressage, de barres métalliques déformées (1) de section transversale ronde, polygonale ou à profil asymétrique pour déterminer la position des zones terminales des barres métalliques et éventuellement la position de leur section transversale dans une zone de mise à disposition (F) ou une zone de préhension (40) et pour approcher, positionner et bloquer un dispositif de préhension (41) d'un robot (4) mobile en translation horizontale dans un portique de guidage (5).
